Europäisches Patentamt

European Patent Office

Office européen des brevets

(11) Publication number: **0 363 142**
**A1**

## EUROPEAN PATENT APPLICATION

(21) Application number: 89310084.2

(22) Date of filing: 03.10.89

(51) Int. Cl.⁵: **F02M 61/16 , B23H 9/14**

(30) Priority: 04.10.88 GB 8823280
31.03.89 GB 8907252

(43) Date of publication of application:
**11.04.90 Bulletin 90/15**

(84) Designated Contracting States:
**DE ES FR GB IT**

(71) Applicant: **LUCAS INDUSTRIES public limited company**
**Great King Street**
**Birmingham, B19 2XF West Midlands(GB)**

(72) Inventor: **Gaskell, David John**
**Firethorns Upper Stanstead**
**Sudbury Suffolk CO10 9AS(GB)**

(74) Representative: **Valentine, Francis Anthony Brinsley et al**
**REDDIE & GROSE 16 Theobalds Road**
**London WC1X 8PL(GB)**

(54) Fuel injection nozzles for internal combustion engines.

(57) A diesel fuel injection nozzle comprises a nozzle body (1) having a central bore and a valve member (9) slidably supported therein in a first bore portion (12) extending from an end face (8) of the body (1). Fuel is delivered to an inlet (23) in the end face (8), and flows through a fuel supply passage (24) in the wall of the body (1) to a fuel gallery (13) adjacent to the first bore portion (12) and thence along a second bore portion (15) to fuel spray holes (22). The fuel flow to the spray holes (22) is controlled by the valve member (9) cooperating with a valve seat (18) in the central bore. Conventionally the fuel supply passage (24) is straight, entering the fuel gallery (13) obliquely and leaving only a thin web of material between the passage (24) and the gallery (13). High pressure fuel pulses are desired in modern engines, but cause fracture of this web. The invention therefore provides a curved fuel passage or passage section (26) to increase the thickness of the web (27) and so reduce the risk of its fracture at high fuel pressures.

FIG.1.

# FUEL INJECTION NOZZLES FOR INTERNAL COMBUSTION ENGINES

This invention relates to fuel injection nozzles for internal combustion engines, the nozzles being of the kind comprising a nozzle body formed with a central bore extending from an end face and having a first portion in which a cylindrical portion of an injection valve member is a close sliding fit, the first portion of the bore being connected by an annular recess, forming a fuel-distribution gallery, to a second bore portion surrounding a reduced-diameter portion of the valve member, the end of which seats in the closed condition of the nozzle on a valve seat formed in the nozzle body to prevent access of fuel from the second portion of the bore to one or more spray nozzles formed in a tip portion of the nozzle body, the nozzle body having a fuel passage in a wall surrounding the first portion of the bore leading from an inlet in the end face to the fuel-distribution gallery.

Conventionally, the fuel passage is formed by a drilling which has to extend at an acute angle to the axis of the bore so as to break into the fuel-distribution gallery. As a result, it is not possible to maintain sufficient thickness of metal (particularly where the drilling breaks into the annular gallery) to ensure that the nozzle is suitable for the highest operating pressures, while ensuring that the drilling communicates with the gallery with sufficient fuel flow cross section.

A fuel injection nozzle according to the present invention is characterised in that the fuel passage changes direction, in the sense of fuel flow, from the inlet to enter the gallery at an increased angle to the bore axis. The fuel passage or a portion thereof may be curved and at least any such curved portion of the passage may conveniently be formed by electrical discharge machining (EDM) or electro-chemical machining (ECM).

More specifically, a curved portion of the fuel supply passage may be formed by EDM or ECM using, by way of example, one of the following types of electrode.

An electrode for forming curved passages in metal workpieces by ECM or EDM may comprise a deformable, electrically insulating tube and a set of parallel, deformable, electrically conducting elements located longitudinally by, and spaced circumferentially around, the wall of the tube, the conducting elements being electrically insulated in use from the workpiece. This type of electrode may advantageously be used to machine a curved passage section extending from a pre-machined passage of a different curvature or from a straight passage. By virtue of its construction, the electrode may be deformed prior to use to take a set of a predetermined curvature to match the required passage section and yet retain sufficient resilience then to be deformed elastically until fro example straight, without losing the set. It may therefore be inserted into a pre-machined passage of a different curvature without losing its set. The preset electrode curvature will then be resiliently regained as the electrode machines the further passage section, whose curvature will thus match the predetermined set curvature of the electrode.

Such an electrode may also be advantageously made sufficiently flexible to machine a passage of varying curvature in a single operation. For this purpose the electric currents supplied to each of the conducting elements may be controlled independently and thus the machining rates at areas of the working face corresponding to each element of the electrode may be controlled independently. If the machining rate on one side of the working face is thus made greater than on the other then a curved passage will be formed as the electrode advances during machining, the electrode being sufficiently flexible to follow the curvature. Control of the currents in the conducting elements can in this way determine both the curvature and direction of the passage machined.

The radially outer wall of the electrically insulating tube may be perforated so as to expose the conducting elements around a part of the circumference of the electrode. Material removal to one side of the passage being machine may be enhanced with the use of such an electrode.

Alternatively an electrode for forming curved passages in metal workpieces by ECM or EDM may comprise an electrically insulating tube having an annular working end around which is distributed conducting means forming the working tip of the electrode, and electrical conductor means extending from the tip along the insulating tube, wherein the electrode tube is capable of being deformed prior to use to take a set of a predetermined curvature, and the curved electrode is sufficiently resilient to be capable of being substantially straightened without losing its set.

The electrode may thus be resiliently straightened for insertion into a pre-machined straight fuel passage section, which may be formed by conventional drilling, regaining its predetermined set curvature on futher machining by ECM of the further curved fuel passage section.

These electrodes may be used to form a curved portion of a fuel supply passage for a fuel injector nozzle, and may also be used for a wide variety of other applications.

The invention will now be described in more detail by way of example with reference to the drawings in which:-

Figure 1 is a longitudinal sectional view of a diesel fuel injector nozzle;

Figure 2 is a longitudinal sectional view of a flexible electrode with a preformed curved section;

Figure 3 is a cross section of the flexible electrode of figure 2;

Figure 4 shows a portion of figure 1 on an enlarged scale with the electrode of figures 2 and 3 in use;

Figure 5 is a longitudinal sectional view of a further electrode, and;

Figure 6 is a cross section of the electrode of figure 5.

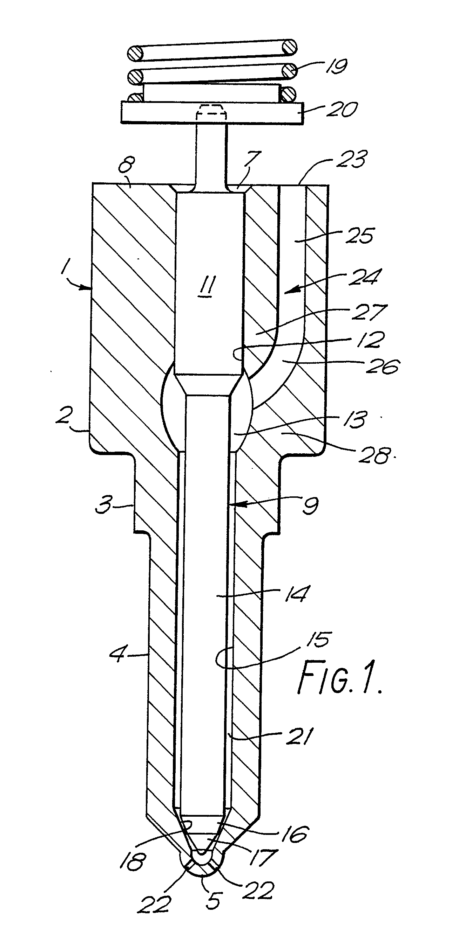

The fuel injection nozzle shown in figure 1 is for use in a compression-ignition engine and comprises a nozzle body 1 in the form of a body of revolution having a relatively large diameter upper end 2, an intermediate diameter portion 3 and a nozzle forming portion 4 of further reduced diameter, terminating in a nozzle tip 5.

An axial bore extends from an entry 7 in the free end surface 8 of the nozzle body portion 2 to the nozzle tip 5. Mounted within the bore is a valve member 9 which has a cylindrical portion 11 which is a very close sliding fit in a first bore portion 12 leading from the entry 7 into a fuel distribution gallery 13 formed by an enlargement of the bore. The remainder 14 of the valve member 9 is of reduced diameter and extends through a second bore portion 15 within the body portions 3 and 4 to terminate in a valve tip formed by first and second frusto-conical surfaces 16 and 17, the junction of these two surfaces seating on a conical seating surface 18.

The valve member 9 is resiliently urged for example by a strong spring 19 and thrust washer 20 into the closed condition in which it seats on the seating 18, thereby closing off access from the clearance space 21, between the valve member portion 14 and the bore 15, to the spray nozzles 22 in a sac portion of the nozzle tip 5.

Fuel is delivered to the gallery 13 and thence to the clearance 21 through a fuel inlet passage 24 which has an inlet portion 25 extending parallel to the axis of the valve member 9 from an inlet 23 in the end face 8. This straight portion 25 is connected to the fuel distribution gallery 13 by a curved portion 26 of the inlet passage. The curved portion 26 enters the gallery 13 at a greater angle than could be obtained by a straight drilled passage from the inlet 23. Accordingly, the wall of the gallery 13 can be smoothly rounded as shown while ensuring an adequate flow cross section for the fuel entering the gallery while at the same time the thickness of the metal in the regions 27 and 28 can be sufficiently thick as compared with known designs to enable the injection nozzle to be used with higher fuel pressures than can be safely used with such known designs.

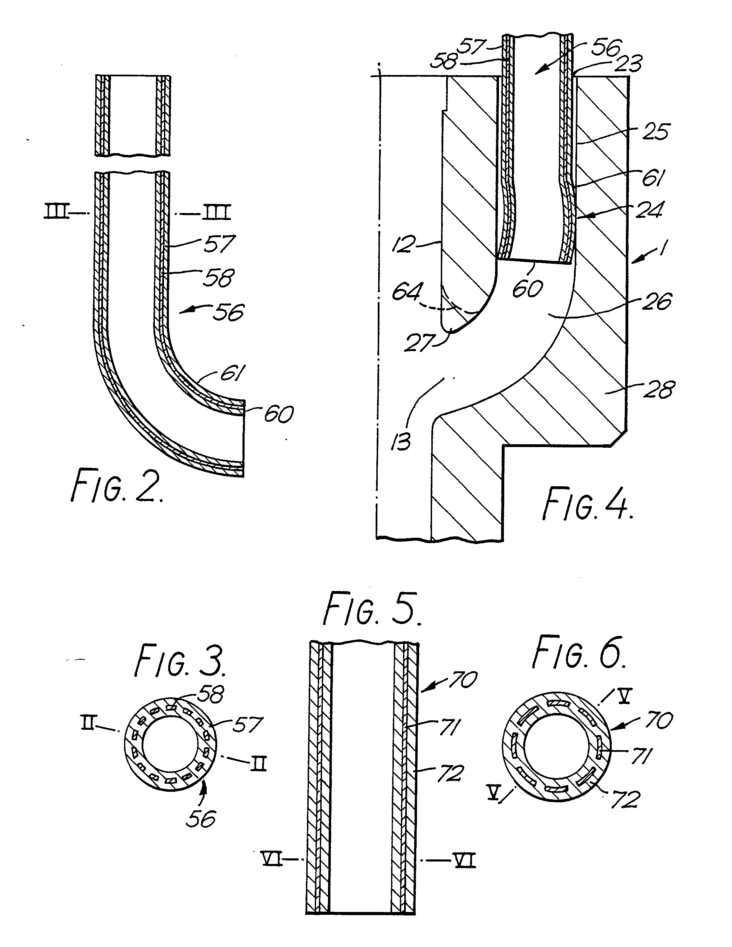

At least the curved portion 26 of the inlet passage 24 can readily be formed by electrochemical machining (ECM) or electrical discharge machining (EDM). The fuel inlet passage 24 may thus be formed as folows, referring to figures 2 to 6.

A straight passage section 25 is first drilled conventionally, either mechanically or otherwise. The straight passage section 25 is then extended by ECM or EDM, forming a curved passage section 26 entering the fuel gallery 13 at a greater angle to the nozzle axis than in a conventional fuel injector with a straight fuel passage, thus producing a thicker, stronger web 27 between the fuel passage 24 and the first bore portion 12. In addition, ECM produces no burrs at the intersection of the supply passage 24 and the fuel gallery 13.

The curved passage section 26 may be machined electrochemically using the electrode 56 shown in figures 2 and 3. The electrode 56 comprises a flexible electrically insulating tube 57 in the wall of which a plurality, in this instance fourteen, of parallel, flexible, electrically conducting strips 58 are longitudinally located and circumferentially spaced. The electrically conducting strips 58 may be wholly insulated except at the working face of the electrode.

The electrode may alternatively be constructed, for ease of fabrication, by inserting conducting strips into longitudinal grooves formed on the inner wall of an extruded plastics or rubber tube. The conducting elements may be held slidably captive in the tube by for example the shape of the longitudinal grooves or by the insertion of a second insulating tube within the first.

The electrode 56 is used conventionally for ECM, electrolyte being pumped down the centre of the tube 57 and returning between the tube and the walls of the passage being machined, a voltage being applied between the conducting elements 58 and the injector body 1 to cause local dissolution of the injector body 1 opposite the electrode tip 60.

The end portion 61 of the electrode 56 can be deformed, typically by first warming the tube 57, to take a set of a predetermined curvature. This deformed section 61 however, by virtue of its construction, retains suficient resilience to be inserted into the pre-machined straight fuel passage section 25 without losing its set. During subsequent ECM, the resilience of the electrode enables it to regain its set curvature, and so a matching curved fuel passage section 26 is formed extending from the straight fuel passage section 25.

By forming perforations in the outer insulating side wall of the electrode to that the conducting elements are exposed near the working face on the inner side of the curved electrode portion, material removal at the adjacent side of the passage will be enhanced. As the electrode reaches the position at which it emerges into the fuel gallery 13, machining may then be continued so as to flare the opening of the fuel passage 26 into the fuel gallery 13 as shown by the dotted line 64 in figure 4. This has the effect of removing the thinner portion of the web 27, thus further decreasing the risk of failure of the web 27 during operation of the injector.

A second flexible electrode 70 is shown in figures 5 and 6. This electrode 70 is of similar construction to that of the previous embodiment, and comprises a plurality, in this example eight, of flexible conducting strips 71 longitudinally located and circumferentially spaced in the wall of a flexible, insulating tube 72.

During ECM, the current supply to each conducting strip 71 of the electrode can be controlled independently. If the machining rate on one side of the working face is made greater than that on the other, the working face tends to tilt. As machining progresses, the flexibility of the electrode allows it to align its working end with the tilted working face and thus to machine for example the curved fuel passage section 26. The radius of curvature of the passage may be determined by appropriate control of the currents in the conducting strips 71 of the electrode and thus by the resulting variation of machining rates at each part of the working face, and by the stiffness of the electrode. The direction of curvature of the passage may be controlled by means of the positions of maximum and minimum machining rates on the working face.

This arrangement thus allows control of the direction and curvature of the fuel passage 24 at any point during machining. Both straight and curved fuel passage sections may thus be formed in a single operation with a single electrode 70.

## Claims

1. A fuel injection nozzle comprising a nozzle body (1) formed with a central bore extending from an end face (8) and having a first bore portion (12) in which a cylindrical portion (11) of an injection valve member (9) is a close sliding fit, the first bore portion (12) being connected by an annular recess forming a fuel distribution gallery (13) to a second bore portion (15) surrounding a reduced diameter portion (14) of the valve member (9), the end of which seats, in the closed condition of the nozzle, on a valve seat (18) formed in a tip portion (5) of the nozzle body (1), fuel spray holes (22) being formed in the wall of the tip portion (5) of the nozzle body (1), the nozzle body (1) further comprising a fuel supply passage (24) in a wall surrounding the first bore portion (12), the fuel supply passage (24) leading from an inlet (23) in the end face (8) of the nozzle body (1) to the fuel gallery (13), characterised in that the fuel supply passage (24) changes direction between the inlet (23) and the fuel gallery (13), to enter the fuel gallery (13) at an increased angle to the bore axis.

2. A fuel injection nozzle according to claim 1, characterised in that the fuel supply passage (24) comprises a straight portion (25) extending from the end face (8) of the nozzle body (1) and a curved portion (26) extending from the straight passage portion (25) to the fuel gallery (13).

3. A fuel injection nozzle according to claim 2, characterised in that the straight fuel passage portion (25) is substantially parallel to the bore axis.

4. A fuel injection nozzle according to any preceding claim, characterised in that at least a portion of the fuel supply passage (24) is formed by electrochemical machining or electrical discharge machining.

5. A fuel injection nozzle according to claim 2, 3 or 4, characterised in that the straight passage section (25) is formed by mechanical drilling or machining, and the curved passage section (26) is formed by electrochemical machining or electrical discharge machining.

6. A method for forming a fuel injection nozzle according to claim 1, 2 or 3, characterised in that at least a curved portion of the fuel supply passage (24) is formed by electrochemical machining (ECM) or electrical discharge machining (EDM).

7. A method for forming a fuel injection nozzle according to claim 2 or 3, characterised in that the straight portion (25) of the fuel supply passage (24) is first drilled as a blind passage from the end face (8) of the nozzle body (1) and the curved portion (26) of the fuel supply passage (24) is formed by electrochemical machining (ECM) or electrical discharge machining (EDM) a curved passage section from the blind end of the straight passage section (25) to open into the fuel gallery (13).

FIG.1.

FIG. 2.

FIG. 4.

FIG. 5.

FIG. 3.

FIG. 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 200 950 (LUCAS INDUSTRIES)<br>* page 3, lines 25-30; figure * | 1-3 | F 02 M 61/16<br>B 23 H 9/14 |
| Y | GB-A-2 170 269 (DAIMLER-BENZ)<br>* figure 1 * | 1-3 | |
| Y | US-A-3 406 912 (F.J. CLAFFEY)<br>* column 3, lines 51-65; figure 2 * | 1 | |
| A | | 2,3,5,7 | |
| Y | MOTORTECHNISCHE ZEITSCHRIFT<br>vol. 38, June 1977, Stuttgart, D * page 265; figure 11 * | 1 | |
| A | idem | 2,3 | |
| A | MOTORTECHNISCHE ZEITSCHRIFT<br>vol. 38, May 1977, Stuttgart, D * page 224, paragraph 2.1; figure 3 * | 1,2,4-7 | |
| A | DE-A-3 531 761<br>(KLOECKNER-HUMBOLDT-DEUTZ AG)<br>* column 2, lines 44-64; claim 1; figures 1,2 * | 4-7 | TECHNICAL FIELDS SEARCHED (Int. Cl.5)<br><br>F 02 M<br>B 23 H |

The present search report has been drawn up for all claims

| Place of search | Date of completion of the search | Examiner |
|---|---|---|
| BERLIN | 12-12-1989 | NOVELLI B. |